# NEUE EUROPÄISCHE PATENTSCHRIFT

(11) **EP 3 962 994 B2**
(45) Veröffentlichungstag und Bekanntmachung des Hinweises auf die Entscheidung über den Einspruch: **07.10.2026**
(45) Hinweis auf die Patenterteilung: 07.06.2023
(21) Anmeldenummer: 20720491.8
(22) Anmeldetag: 28.04.2020
(51) Int. Cl.: C08K 7/14, C08K 7/20, C08L 23/12

(54) **POLYMERE ZUSAMMENSETZUNGEN ENTHALTEND EIN TEILKRISTALLINES POLYMER UND VERFAHREN ZU DEREN HERSTELLUNG**
POLYMER COMPOSITIONS THAT CONTAIN A SEMI-CRYSTALLINE POLYMER, AND PROCESS OF PREPARATION
COMPOSITIONS POLYMÈRES CONTENANT UN POLYMÈRE PARTIELLEMENT CRISTALLIN ET LEUR PROCÉDÉ DE PRODUCTION

(30) Priorität: 29.04.2019 EP 19171513
(43) Veröffentlichungstag der Anmeldung: 09.03.2022
(73) Patentinhaber: INEOS Styrolution Group GmbH, 60325 Frankfurt (DE)
(72) Erfinder: NIESSNER, Norbert, 67159 Friedelsheim (DE)
(74) Vertreter: Jacobi, Markus Alexander
(86) Internationale Anmeldenummer: PCT/EP2020/061793
(87) Internationale Veröffentlichungsnummer: WO 2020/221764

(56) Entgegenhaltungen:
- EP-A1- 3 184 586
- EP-A2- 0 945 253
- WO-A1-2009/065589
- WO-A1-2013/138158
- WO-A1-2018/114979
- WO-A1-2022/129045
- JP-A- H01 160 828
- US-A- 4 603 153
- US-A1- 2015 073 076
- HANS ZWEIFEL , RALPH D. MAIER , MICHAEL SCHILLE: "Plastics Additives Handbook 6th edition", 1 January 2009, HANSER, ISBN: 978-3-446-40801-2, article ZWEIFEL, HANS; ; MAIER, RALPH-DIETER; SCHILLER, MICHAE; AMOS, STEPHEN E: "Chapter 17: Fillers and Reinforcements/Coupling Agents", pages: 920 - 966, XP009554987
- YALCIN BARIS , STEVE E. AMOS, MARK J. WILLIAMS, I. SEDAT GUNES, TROY K. ISTA, 3M COMPANY, ST. PAUL, MN, USA STEFAN FRIEDRICH AND M: "3M Glass Bubbles iM16K for Reinforced Thermoplastics", 3M SCIENCE APPLIED TO LIFE TECHNICAL PAPER, 1 January 2010 (2010-01-01), pages 1 - 5, XP093175610
- "Chopvantage HP 3299 chopped fiber glass ", NIPPON ELECTRIC GLASS, 1 December 2017 (2017-12-01), pages 1 - 2, XP093175614, Retrieved from the Internet <URL:https://www.neg.co.jp/assets/file/product/fiber/e-chopped_strand/e-chopped_strand_list/ChopVantage_HP3299.pdf> [retrieved on 20240617]
- JORDENS, C. ; SCHELLER, M. ; WIETZKE, S. ; ROMEIKE, D. ; JANSEN, C. ; ZENTGRAF, T. ; WIESAUER, K. ; REISECKER, V. ; KOCH, M.: "Terahertz spectroscopy to study the orientation of glass fibres in reinforced plastics", COMPOSITES SCIENCE AND TECHNOLOGY, vol. 70, no. 3, 1 March 2010 (2010-03-01), AMSTERDAM, NL , pages 472 - 477, XP026882874, ISSN: 0266-3538, DOI: 10.1016/j.compscitech.2009.11.022
- "Adstif HA840R Polypropyhine, High Crystallinity", LYONDELLTLASELL, 22 December 2008 (2008-12-22), pages 1 - 2, XP093175620
- HARUTUN G. KARIAN: "Handbook of Polypropylene and Polypropylene composites", 1 January 2003, CRC PRESS, ISBN: 9780824740641, article KARIAN, HARUTUN G. : "Glass Fiber-Reinforced Polypropylene", pages: 311 - 382 + 58, XP009554988
- "3M iM30K Hi-Strength Glass Bubbles", 3M, 1 January 2008 (2008-01-01), pages 1 - 2, XP093175625
- ANONYMOUS: "Polypropylene EE013AE Polypropylene Reactor Elastomer Modified", BOREALIS, 2 September 2010 (2010-09-02), pages 1 - 3, XP093175629
- ANONYMOUS: "Thermoflow chopped strand 636 for PP", JOHNS MANVILLE, 201100701, pages 1 - 2, XP093175636, Retrieved from the Internet <URL:https://holtex.pl/wgrane-pliki/chopped-strand-636-for-pp.pdf> [retrieved on 20240617]
- NELLA PASQUINI: "Propylene handbook 2nd edition", 1 January 2005, HANSER , Munich, ISBN: 978-1-56990-385-8, article ANONYMOUS: "Heterophasic Copolymers", pages: 314 - 315, XP093175640
- MORELLI CAROLINA L, POUZADA ANTÓNIO S.; SOUSA JOSÉ A.: "Influence of hybridization of glass fiber and talc on the mechanical performance of polypropylene composites", JOURNAL OF APPLIED POLYMER SCIENCE, vol. 114, no. 6, 15 December 2009 (2009-12-15), US , pages 3592 - 3601, XP093175646, ISSN: 0021-8995, DOI: 10.1002/app.30980
- MICHEL BIRON: "Thermoplastics and Thermoplastic Composites - Series title : Plastics design library", 1 January 2014, OXFORD ; CAMBRIDGE, MA : ELSEVIER, WILLIAM ANDREW, ISBN: 978-0-08-102501-7, article BIRON, MICHEL : "4.3 Other Polyolefins", pages: 245 - 269 +838, XP009554989
- SATHISKUMAR T P, SATHEESHKUMAR S, NAVEEN J: "Glass fiber-reinforced polymer composites - a review", JOURNAL OF REINFORCED PLASTICS & COMPOSITES, vol. 33, no. 13, 1 January 2014 (2014-01-01), pages 1258 - 1275, XP055920455, DOI: 10.1177/0731684414530790
- HARTIKAINEN, J. HINE, P. SZABO, J.S. LINDNER, M. HARMIA, T. DUCKETT, R.A. FRIEDRICH, K.: "Polypropylene hybrid composites reinforced with long glass fibres and particulate filler", COMPOSITES SCIENCE AND TECHNOLOGY, vol. 65, no. 2, 1 February 2005 (2005-02-01), AMSTERDAM, NL , pages 257 - 267, XP004646962, ISSN: 0266-3538, DOI: 10.1016/j.compscitech.2004.07.010
- HARTIKAINEN J, LINDNER M.; HARMIA T.; FRIEDRICH K.: "Mechanical properties of polypropylene composites reinforced with long glass fibres and mineral fillers", PLASTICS, RUBBER AND COMPOSITES MACROMOLECULAR ENGINEERING, vol. 33, no. 2-3, 1 March 2004 (2004-03-01), GB , pages 77 - 84, XP093175664, ISSN: 1465-8011, DOI: 10.1179/146580104225020893
- JÜRGEN FALBE, MANFRED REGITZ: "Römpp Kompakt Basislexikon Chemie ; 3: M-Re", 1 January 1999, THIEME, ISBN: 3-13-115770-4, article ANONYMOUS: "Pulvermetallurgie", pages: 2109, XP009559315
- VÁRDAI RÓBERT, LUMMERSTORFER THOMAS, PRETSCHUH CLAUDIA, JERABEK MICHAEL, GAHLEITNER MARKUS, FALUDI GÁBOR, MÓCZÓ JÁNOS, PUKÁNSZKY B: "Impact modification of fiber reinforced polypropylene composites with flexible poly(ethylene terephthalate) fibers", POLYMER INTERNATIONAL, BARKING, GB, vol. 70, no. 9, 1 September 2021 (2021-09-01), GB , pages 1367 - 1375, XP093221077, ISSN: 0959-8103, DOI: 10.1002/pi.6210
- Dansk Standard, DS/EN ISO 475, Plast-Termer og definitioner 27.02.2013B
- BAUR E, BRINKMANN S, OSSWALD T A, SCHMACHTENBERG E: "SAECHTLING KUNSTSTOFF TASCHENBUCH.", 1 November 2007, CARL HANSER VERLAG. , MÜNCHEN, DE , ISBN: 978-3-446-40352-9, article ERWIN BAUR, SIGRID BRINKMANN, TIM A. OSSWALD, ERNST SCHMACHTENBERG: "6.2 Polyolefine, PO, Polyolefinderivate und -copolymerisate", pages: 446 - 483, XP009558089, DOI: 10.3139/9783446414372.006
- Balloon Syntactic Foams Using Microwave Approach with Superior Thermal and Mechanical Properties':Metals2021,11.827
- Declaration of Markus Gahleitner regarding CLTE of CaCO3, ofthe commercial E-glass fiber 'ThermoFlow EC 13‘ and of the commercial heterophasic propylene copolymer ‘EE013E’

## Beschreibung

Die vorliegende Erfindung betrifft polymere Zusammensetzungen enthaltend eine thermoplastische Formmasse A, mindestens eine Verstärkungsfasern B und mindestens einen anorganischen Füllstoff C, wobei die polymere Zusammensetzung nach thermoplastischer Verarbeitung eine hohe ästhetische Qualität aufweist. Die Erfindung betrifft zudem ein Verfahren zur Herstellung der erfindungsgemäßen Zusammensetzung und dessen Verwendungen.

Bei bestimmten Anwendungen, wie zum Beispiel bei Spritzgussteilen für den Automobil-Außenbereich, ist es wünschenswert polymere Werkstoffe bereitzustellen, welche eine hohe Schlagfestigkeit bei niedriger Temperatur sowie einen verringerten linearen Wärmeausdehnungskoeffizienten und eine hohe Temperaturverformungsbeständigkeit aufweisen. Oftmals ist es bevorzugt, wenn der lineare Wärmeausdehnungskoeffizient (CLTE, gemessen nach ASTM D696 oder gemäß ISO 11359-1 und ISO 11359-2) weniger als 10,0 10⁻⁶ K⁻¹, bevorzugt weniger als 7,0 10⁻⁶ K⁻¹, insbesondere bestimmt im Temperaturbereich von 21 bis 49 °C (70 bis 120 °F), beträgt. Extreme Temperatureinflüsse können dazu führen, dass verschiedene Komponenten der fertigen Baugruppe nicht exakt zusammenpassen. Beispielsweise führt eine Tür- oder Kotflügelkomponente, die sich übermäßig ausdehnt, unter extremen Wärmebedingungen zu einem Knicken oder einer Fehlanpassung des zusammengebauten Fertigprodukts.

Eine weitere wichtige Eigenschaft ist oftmals die Schlagzähigkeit bei niedrigen Temperaturen. Hierbei wird untersucht, inwieweit der polymere Werkstoff unter einem Stoß Risse erhält, oftmals wird dies gemessen an der Schlagfestigkeit gegenüber fallenden Stempeln (Darts).

Im Allgemeinen können verbesserte lineare Wärmeausdehnungskoeffizienten durch den Einbau einer erhöhten Menge an Füllstoffen erhalten werden, jedoch wird die Schlagfestigkeit, insbesondere die Schlagfestigkeit bei niedriger Temperatur, hierdurch oft deutlich herabgesetzt, oftmals bis auf nicht akzeptable Niveaus. Typischerweise bewirken Faserverstärkungsstoffe, wie beispielsweise Glasfaser, das Absenken des linearen Wärmeausdehnungskoeffizienten sehr wirksam. Jedoch sind solche Fasern typischerweise an der Oberfläche des sich ergebenden Objekts sichtbar, wodurch sich eine verminderte, oftmals nicht akzeptable, Oberflächenqualität ergibt.

Typischerweise zeigen Glasfasern ein anisotropes Schwindungsverhalten, insbesondere Fasern mit etwa 5-15 µm Durchmesser und wesentlich größerer Länge, wodurch die glatte, ebene und oftmals glänzende Oberfläche des Kunststoffs negativ beeinflusst wird.

Dementsprechend wäre es wünschenswert, eine verbesserte polymere Zusammensetzungen bereitzustellen, die einen verringerten linearen Wärmeausdehnungskoeffizienten aufweist, während eine akzeptabel hohe Schlagfestigkeit, insbesondere gegenüber Darts, als auch eine geringere Kerbempfindlichkeit (verbesserte Schlagfestigkeit) und eine gute Oberflächenqualität erhalten werden.

Das Patent US 4,098,734 offenbart Mischungen, die ein Matrix-Interpolymer, ein gepfropftes Kautschuk-Copolymer, ein weiteres Polymer mit einem Löslichkeitsparameter im Bereich von 8,5 bis 13 und einen anorganischen Füllstoff umfassen. Es sind Beispiele beschrieben umfassend ein ABS-Harz, etwa 14 % eines Tons und Polymethylmethacrylat oder Cellulosebutyrat.

Das Dokument JP S5263954 beschreibt Polymer-Mischungen, die aus 20 bis 45 Gew .-% eines ABS-Harzes, 45 bis 20 Gew .-% eines Polycarbonats und 5 bis 30 Gew .-% Talk bestehen. Es wird beschrieben, dass solchen Zusammensetzungen geeignete Wärmeverformungseigenschaften fehlen und eine unzureichende Zähigkeit vorliegt, beispielsweise durch Dart-Schiaofestiokeit oder Izod-Kerbschlagzähikeit Gemessen. EP 0 945 253 beschreibt gefüllte, thermoplastiche Glasmattenverbundmaterialien mit verbesserten mechanischen Eigenschaften, zB auf Basis von Polyolefinen, zerhackter Glasfaser und Talk, und beschreibt allgemein, dass die Zugabe von Füllstoffen zu faserverstärkten Verbundmaterialen sowohl das Schrumpfen als auch die Verformung zerhackter Faserprodukte reduziert.

Bei der Herstellung von polymeren Zusammensetzungen und Formteilen enthaltend Verstärkungsfasern spielt insbesondere die Verbindung von Fasern und Polymer-Matrix zueinander eine wesentliche Rolle. Auch die Festigkeit der Einbettung der Fasern in die Polymer-Matrix (Faser-Matrix-Haftung) kann erheblichen Einfluss auf die Eigenschaften des polymeren Werkstoffs haben. Zudem sollte das Verfahren zur Herstellung der Werkstoffe einfach und kostengünstig durchzuführen sein.

Da sowohl die Fasern als auch die Matrix-Materialien variiert werden können, kommen zahlreiche Kombinationsmöglichkeiten von Fasern und Matrix-Materialien in Betracht. Oftmals besteht auf Grund der geringen chemischen Ähnlichkeit zwischen der Faseroberfläche und der umgebenen Polymer-Matrix eine geringe Anziehung und damit eine geringe Haftung zwischen Faser und Matrix-Material.

Zur Optimierung der Faser-Matrix-Haftung und um die geringe chemische Ähnlichkeit zwischen Komponenten, z.B. Komponenten A und B auszugleichen, werden Verstärkungsfasern regelmäßig mit einer sogenannten Schlichte vorbehandelt.

Eine solche Schlichte (Schlichtemittel) wird oftmals während der Herstellung auf die Faser aufgebracht, um die Weiterverarbeitbarkeit der Fasern (wie Weben, Legen, Nähen) zu verbessern. In einigen Fällen werden Verstärkungsfasern B, wie z.B. Glasfasern, auch ohne Schlichte verarbeitet. Oft enthalten diese Glasfaser-Schlichten eine große Anzahl an verschiedenen Komponenten, wie insbesondere Filmbildner, Gleitmittel, Netzmittel und Haftvermittler.

Die Behandlung von Verstärkungsfasern mit einer Schlichte dient unter anderem dazu, die Beschädigung der Fasern durch Abrieb zu verhindern oder den Schneidevorgang der Faser zu erleichtert. Ferner kann durch die Schlichte eine Agglomeration der Fasern vermieden werden und die Dispergierbarkeit von Fasern in Wasser kann verbessert werden. Eine Schlichte kann allerdings auch dazu beitragen, dass ein verbesserter Zusammenhalt zwischen den Glasfasern und der Polymer-Matrix, in welcher die Glasfasern als Verstärkungsfasern wirken, hergestellt wird. Dieses Prinzip findet vor allem bei den glasfaserverstärken Kunststoffen (GFK) Anwendung. Typischerweise können Haftvermittler in der Schlichte die Adhäsion von Polymeren an der Faseroberfläche erhöhen, indem sie eine überbrückende Schicht zwischen den Oberflächen bilden. Oftmals werden organo-funktionellen Silane, wie beispielsweise Aminopropyltriethoxysilan, Methacryloxypropyltrimethoxysilan, Glycidyloxypropyltrimethoxysilan und ähnliche, eingesetzt.

In WO 2008/058971 werden Formmassen beschrieben, welche verschiedene Gruppe von Verstärkungsfasern enthalten können. Die verschiedenen Gruppen von Verstärkungsfasern sind jeweils mit verschiedenen Haftvermittler-Komponenten versehen, welche die jeweilige Faser-Matrix-Haftungen bewirken sollen. Als Matrixmaterialien werden Duroplasten, wie Polyester, und Thermoplasten, wie Polyamid und Polypropylen, vorgeschlagen.

Die WO 2010/074120 beschreibt eine faserverstärkte Polypropylen-Harz-Zusammensetzung enthaltend eine Verstärkungsfaser, ein weitgehend unmodifiziertes Polypropylen-Harz und zwei weitere Polypropylen-Harze umfassend ein Carboxy-modifiziertes Polypropylen-Harz, wobei das Molekulargewicht der verschiedenen Polypropylen-Harze definiert ist.

Glasfaserverstärkte Polypropylen-Harze werden ferner beispielsweise in CN-A 102 558685, CN-A 102911433, CN 102924815, CN-A 103788470, CN-A 103819811, CN-A 104419058, CN-A 103772825, WO 2016/101139, WO 2016/154791, CN-A 107 815013, CN-A 107118437, WO 2019/010672 und CN-A 108164822 beschrieben.

Eine Aufgabe der Erfindung ist es, eine verbesserte polymere Zusammensetzung bzw. einen verbesserten polymeren Werkstoff, bevorzugt auf der Basis eines teilkristallinen Polymers, insbesondere eines teilkristallinen Polyolefins, bereitzustellen, welche einen niedrigen Wärmeausdehnungskoeffizenten, gute Festigkeit und eine hohe Oberflächenqualität (d.h. eine niedrige Oberflächenwelligkeit) aufweist, sowie spannungsriss- und lösungsmittelbeständig ist. Zudem soll die polymere Zusammensetzung zur Herstellung von Formkörpern, Folien und Beschichtungen geeignet sein. Weiterhin soll die Herstellung der polymeren Zusammensetzung kostengünstig und in einem gängigen Verfahren mit möglichst kurzen Zykluszeiten möglich sein.

Es wurde überraschend gefunden, dass die Oberflächen fasergefüllter Werkstoffe, deren Aussehen oftmals auf Grund des Schwindungsverhaltens der Faser-Komponente beeinträchtigt ist, durch Zusatz isotrop schwindender Komponenten, bevorzugt anorganischer Füllstoffe, mit ähnlich niedriger Volumenschwindung wie Glasfasern verbessert werden können. Erfindungsgemäß sind die Filamente der Verstärkungsfaser zu Ge-weben und/oder Garnen gebündelt, wobei hier insbesondere gefunden wurde, dass ein besonders geringer Schwund und eine besonders ästhetische Oberfläche einer polymeren Zusammensetzung mit den oben genannten Eigenschaften dadurch erhalten werden kann, dass das Füllstoff-Matrix-Verhältnis sowohl im Volumenanteil der Faser als auch außerhalb annähernd gleich ist.

Idealerweise wird dies erreicht, wenn die thermoplastische Matrix (außerhalb des Faservolumenanteils) bis zu etwa 70 Gew.-% Füllstoff enthält, welcher einen deutlich niedrigeren, linearen thermischen Ausdehnungskoeffizenten (CLTE Coefficient of Linear Thermal Expansion) aufweist als das thermoplastische Polymer der Matrix. Wird ein geringerer Füllstoffanteil realisiert, wird typischerweise nur eine Minderung der Schwindungsunterschiede erreicht.

Es wurde überraschend gefunden, dass verbesserte Eigenschaften der polymeren Zusammensetzung erhalten werden, wenn die thermoplastische Formmasse enthaltend ein teilkristallines und optional ein amorphes Polymer (z.B. Polymere ausgewählt aus Styrol-Acrylnitril-Copolymeren, Polycarbonat, Polyamid, Polypropylen) zudem eine Polymer-Komponente A2 aufweist, die eine chemisch reaktive Funktionalität aufweist, welche mit chemischen Gruppen an der Oberfläche der Verstärkungsfaser reagieren kann, und in der Lage ist, chemisch - zumindest teilweise - an die anorganischen Füllstoffe anzubinden. Insbesondere hat sich für A2 der Einsatz von Propylen-Maleinsäureanhydrid-Pfropfcopolymeren mit einem ausgewählten Anteil an Maleinsäureanhydrid als funktionelles Monomer als besonders vorteilhaft erwiesen.

Die vorliegende Erfindung betrifft eine polymere Zusammensetzung enthaltend:
a) 20 bis 79 Gew.-%, bevorzugt 25 bis 55 Gew.-%, einer thermoplastischen Formmasse A, wobei die thermoplastischen Formmasse A mindestens ein teilkristallines Polymer A1, bevorzugt mindestens ein teilkristallines Polyolefin-Polymer A1, und optional mindestens ein Polymer A2 umfassend mindestens ein funktionelles Monomer A2-I enthält;
b) 10 bis 79 Gew.-%, bevorzugt 20 bis 60 Gew.-%, mindestens einer Verstärkungsfaser B, wobei die Filamente der Verstärkungsfaser B zu Geweben und/oder Garnen gebündelt sind, bevorzugt ausgewählt aus anorganischen oder organischen Verstärkungsfasern, insbesondere ausgewählt aus Glasfasern und/oder Kohlenstofffasern, besonders bevorzugt aus Glasfasern;
c) 1 bis 70 Gew.-%, bevorzugt 5 bis 35 Gew.-%, mindestens eines anorganischen Füllstoffs C, und
d) 0 bis 10 Gew.-%, bevorzugt 0,01 bis 10 Gew.-%, weiterhin bevorzugt 0,1 bis 5 Gew.-%, mindestens eines weiteren Additivs D, bevorzugt ausgewählt aus Verarbeitungshilfsmittel, Stabilisatoren, Gleit- und Entformungsmitteln, Flammschutzmitteln, Farbstoffen, Pigmenten und Weichmachern;

wobei der mindestens eine anorganische Füllstoff C einen linearen thermischen Ausdehnungskoeffizienten α_{C} (CLTE, Coefficient of Linear Thermal Extension, gemessen gemäß ISO 11359-1 und ISO 11359-2) aufweist, der geringer ist als der lineare, thermische Ausdehnungskoeffizienten α_{A} der thermoplastischen Formmasse A, (d.h. es gilt α_{C} < α_{A});
wobei der mindestens eine anorganische Füllstoff C einen Volumenschrumpf aufweist, der 0,1 bis 10 mal, bevorzugt 0,2 bis 5 mal, so groß ist wie der Volumenschrumpf der Verstärkungsfaser B, wobei sich der Volumenschrumpf ergibt aus dem Koeffizient der thermischen Volumenausdehnung α_{V} in 1/K der jeweiligen Komponente multipliziert mit dem Anteil der jeweiligen Komponente in der polymeren Zusammensetzung in Vol.-%/100, wobei gilt: $\frac{{α}_{V , C} \times Volumenanteil C}{{α}_{V , B} \times Volumenanteil B} = 0 , 1 - 10$ mit
   α_{V,C} = Koeffizient der thermischen Volumenausdehnung von C in 1/K,
   wobei α_{V,C} = 3 *α_{C} ist;
   Volumenanteil C = Volumenanteil von C, bezogen auf die gesamte polymere Zusammensetzung, in Vol.-% /100;
   α_{V,B} = Koeffizient der thermischen Volumenausdehnung von B in 1/K,
   wobei α_{V,B} = 3 * α_{B} ist;
   Volumenanteil B = Volumenanteil von B, bezogen auf die gesamte polymere Zusammensetzung, in Vol.-% /100;
und wobei die Angaben in Gew.-% und in Vol.-% jeweils bezogen sind auf die gesamte polymere Zusammensetzung.

Im Sinne der vorliegenden Erfindung wird der lineare thermische Ausdehnungskoeffizient α (CLTE, Coefficient of Linear Thermal Extension) gemäß der ISO 11359-2 (insbesondere ISO 11359-2:1999) bestimmt, wobei die ISO 11359-1 (insbesondere ISO 11359-1:2014) die allgemeinen Grundlagen zu den thermomechanischen Testmethoden beschreibt. Typischerweise ergibt sich der lineare thermische Ausdehnungskoeffizient α (insbesondere der mittlere lineare thermische Ausdehnungskoeffizient α) mit der Einheit 1/K gemäß: $α = \frac{Δ L}{Δ T} \times \frac{1}{{L}_{0}}$ mit
ΔL = Längenänderung der Testprobe zwischen zwei Temperaturen T₁ und T₂;
ΔT = Temperaturänderung (= T₂-T₁);
L₀ = Referenzlänge der Probe bei Raumtemperatur in der Richtung der Messung.

Größe und Lage des Temperaturbereich ΔT wird typischerweise gemäß der Normen ISO 11359-1,2 gewählt. Typischerweise wird der thermische Ausdehnungskoeffizient in einem Temperaturbereich ΔT im Bereich von 30-200 °C, insbesondere 40-150 °C, insbesondere 70-120 °C bestimmt.

Typischerweise erhält man den Koeffizient der thermischen Volumenausdehnung αᵥ, indem man in der Gleichung oben die Ausdrücke "Länge" mit "Volumen" ersetzt. Näherungsweise kann oftmals angenommen werden, dass der Koeffizient der thermischen Volumenausdehnung αᵥ dem dreifachen des linearen thermischen Ausdehnungskoeffizienten α entspricht (αᵥ = 3 * α). Oftmals wird als linearer thermischer Ausdehnungskoeffizienten α ein Wert gemittelt über zwei oder drei der Dimensionen der Testprobe verwendet. In Analogie zum linearen thermischen Ausdehnungskoeffizent gilt: ${α}_{V} = \frac{Δ V}{Δ T} \times \frac{1}{{V}_{O}}$

Im Sinne der vorliegenden Erfindung ergibtsich der Volumenschwund des mindestens einen Füllstoffs C gemäß: $Δ {V}_{C} = {α}_{V , C} \times Volumenanteil C \left[in \frac{Vol . %}{100}\right]$ wobei der Volumenanteil an C bezogen ist auf die gesamte polymere Zusammensetzung, und wobei näherungsweise gilt α_{v,c}= 3 * α_{c}.

Im Sinne der vorliegenden Erfindung ergibt sich der Volumenschwund der mindestens einen Verstärkungsfaser B gemäß: $Δ {V}_{B} = {α}_{V , B} \times Volumenanteil B \left[in \frac{Vol . %}{100}\right]$ wobei der Volumenanteil an B bezogen ist auf die gesamte polymere Zusammensetzung, und wobei näherungsweise gilt α_{V,B} = 3 * α_{B}.

Für das Verhältnis ΔV_{C}/ΔV_{B} gilt zudem: $\frac{Δ {V}_{C}}{Δ {V}_{B}} = \frac{{α}_{V , C} \times \frac{Gewichtsanteil C \left[in\frac{Gew . %}{100}\right]}{Dichte C \left[in\frac{g}{{cm}^{3}}\right]}}{{α}_{V , B} \times \frac{Gewichtsanteil B \left[in\frac{Gew . %}{100}\right]}{Dichte B \left[in\frac{g}{{cm}^{3}}\right]}}$

Eine bevorzugte Ausführungsform der Erfindung betrifft eine polymere Zusammensetzung enthaltend (bevorzugt bestehend aus):
a) 20 bis 79 Gew.-%, bevorzugt 25 bis 55 Gew.-%, einer thermoplastischen Formmasse A, wobei die thermoplastische Formmasse A mindestens ein teilkristallines Polyolefin-Polymer A1, und optional mindestens ein weiteres Polymer A2 umfassend mindestens ein funktionelles Monomer A2-I enthält, und wobei das mindestens eine teilkristalline Polyolefin-Polymer A1 ausgewählt ist aus:
   teilkristallinen Homo- oder Copolymeren aus Ethylen, Propylen, Butylen und/oder Isobutylen und wobei es sich bei dem Polymer A2 um ein Polymer aus Ethylen, Propylen, Butylen und/oder Isobutylen handelt, wobei das Polymer ferner mindestens ein funktionelles Monomer A2-I enthält, ausgewählt aus Maleinsäureanhydrid, N-Phenylmaleimid, tert-Butyl(meth)acrylat und Glycidyl-(meth)acrylat;
b) 10 bis 79 Gew.-%, bevorzugt 20 bis 60 Gew.-%, der mindestens einen Verstärkungsfaser B, ausgewählt aus Glasfasern und/oder Kohlenstofffasern, bevorzugt aus Glasfasern;
c) 1 bis 70 Gew.-%, bevorzugt 1 bis 60 Gew.-%, besonders bevorzugt 5 bis 35 Gew.-%, mindestens eines anorganischen Füllstoffs C und Additivs D.
d) 0 bis 10 Gew.-%, bevorzugt 0,1 bis Gew.-%, mindestens eines weiteren Additivs D.

In Ausführungsformen, in denen die optionale Komponente D enthalten ist, kann insbesondere der Anteil der thermoplastischen Formmasse A entsprechend angepasst werden, so dass 100 Gew.-% erhalten oder nicht überschritten werden.

In einer bevorzugten Ausführungsform ergeben die Anteile der Komponenten A, B, C und optional D gerade 100 Gew.-% der Zusammensetzung.

### Thermoplastische Formmasse A

Die polymere Zusammensetzung enthält mindestens 20 Gew.-%, in der Regel mindestens 30 Gew.-%, bezogen auf das Gesamtgewicht der polymeren Zusammensetzung, der thermoplastischen Formmasse A. Die thermoplastische Formmasse A ist in der polymeren Zusammensetzung von 20 bis 79 Gew.-%, bevorzugt von 25 bis 55 Gew.-%, bezogen auf die gesamte polymere Zusammensetzung, enthalten.

Bevorzugt ist die thermoplastische Formmasse A in der polymerer Zusammensetzung von 20 bis 80 Vol.-%, bevorzugt von 30 bis 70 Vol.-% und insbesondere bevorzugt von 50 bis 60 Vol.-%, bezogen auf die polymere Zusammensetzung, enthalten.

Die thermoplastische Formmasse A enthält mindestens ein teilkristallines Polymer A1, z.B. ausgewählt aus Polyestern, Polyamiden und Polyolefinen, und optional mindestens ein Polymer A2, welches mindestens ein funktionelles Monomer A2-I umfasst.

Bevorzugt handelt es sich bei dem teilkristallinen Polymer A1 um ein teilkristallines Polyolefin-Polymer A1. Die thermoplastische Formmasse A kann optional weiterhin mindestens ein amorphes Polymer, beispielsweise Polystyrolen (PS), Styrol/Acrylnitril-Copolymeren (PSAN), Acrylnitril/Butadien/Styrol-Copolymeren (ABS), Acrylat/Styrol/Acrylnitril-Copolymeren (ASA), oder Polycarbonaten, enthalten.

In einer bevorzugten Ausführungsform enthält die thermoplastische Formmasse A 1 bis 100 Gew.-%, bezogen auf die gesamte Formmasse A. des mindestens einen teilkristallinen Polymers A1, ausgewählt aus Polyamid, Polypropylen und Polyethylen. Bevorzugt kann die thermoplastische Formmasse A 0 bis 99 Gew.-% des mindestens einen Polymers A2 und/oder A3, jeweils bezogen auf die gesamte thermoplastische Formmasse A, enthalten.

In einer bevorzugten Ausführungsform enthält die thermoplastische Formmasse A 60 bis 99,9 Gew.-%, bevorzugt 70 bis 99,9 Gew.-%, besonders bevorzugt 75 bis 99,9 Gew.-%, insbesondere bevorzugt 90 bis 99 Gew.-%, weiterhin bevorzugt 94 bis 97 Gew.-%, des mindestens einen teilkristallinen Polymers A1, insbesondere des teilkristallinen Polyolefin-Polymers A1, und 0,1 bis 40 Gew.-%, bevorzugt 0,1 bis 30 Gew.-%, besonders bevorzugt 0,1 bis 20 Gew.-%, insbesondere bevorzugt 1 bis 10 Gew.-%, weiterhin bevorzugt 3 bis 6 Gew.-% des mindestens einen Polymers A2, jeweils bezogen auf die gesamte thermoplastische Formmasse A.

Bevorzugt besteht die thermoplastische Formmasse A aus der Komponente A1, besonders bevorzugt aus den Komponenten A1 und A2.

In einer weiteren Ausführungsform enthält die thermoplastische Formmasse A die Polymer-Komponenten A1 und A2 und optional eine oder mehrere weitere PolymerKomponenten A3. Typischerweise kann die optionale Polymer-Komponente A3 ausgewählt werden aus einem beliebigen thermoplastischen Polymer, verschieden zu A1 und A2. Beispielsweise kann die optionale Polymer-Komponente A3 ausgewählt werden aus Polystyrolen (PS), Styrol/Acrylnitril-Copolymeren (PSAN), Acrylnitril/Butadien/Styrol-Copolymeren (ABS), Acrylat/Styrol/Acrylnitril-Copolymeren (ASA), Polycarbonaten, Polyestern, Polyamiden, Pololefinen. Insbesondere ist die optionale Polymer-Komponente A3 ausgewählt aus Polyethylen, Ethylen/Propylen-Copolymeren, Styrol-Polymeren und Styrol/Acrylnitril-Copolymeren. Bevorzugt kann es sich bei dem Polymer A3 um ein oder mehrere amorphe Polymere handeln. Insbesondere weist die thermoplastische Formmasse A einen Anteil von kleiner als 50 Gew.-% amorphe Polymere, insbesondere amorphe Polymere A3 auf.

Bevorzugt enthält die thermoplastische Formmasse A:
50 bis 99,9 Gew.-%, bevorzugt 70 bis 99,9 Gew.-%, besonders bevorzugt 79 bis 98 Gew.-%, insbesondere bevorzugt 95 bis 97 Gew.-%, des teilkristallinen Polyolefin-Polymers A1;
0,1 bis 20 Gew.-%, bevorzugt 0,1 bis 10 Gew.-%, besonders bevorzugt 1 bis 6 Gew.-%, insbesondere bevorzugt 3 bis 5 Gew.-%, des mindestens einen Polymers A2
0 bis 49,9 Gew.-%, bevorzugt 0 bis 29,9 Gew.-%, bevorzugt 1 bis 20 Gew.-%, mindestens einer weiteren Polymer-Komponente A3;
wobei sich die Angaben in Gew.-% jeweils auf das Gesamtgewicht der thermoplastischen Formmasse A beziehen. Bevorzugt besteht die thermoplastische Formmasse aus den Komponenten A1, A2 und A3.

### Das teilkristalline Polymer A1

Bevorzugt enthält die thermoplastische Formmasse A mindestens 50 Gew.-%, bevorzugt mindestens 60 Gew.-%, insbesondere mindestens 80 Gew.-% des mindestens einen teilkristallinen Polymers A1, bevorzugt des mindestens einen teilkristallinen Polyolefin-Polymers A1, bezogen auf die gesamte thermoplastische Formmasse A. Bevorzugt enthält die thermoplastische Formmasse A das mindestens eine Polymer A1 im Bereich von 70 bis 99,9 Gew.-%, bevorzugt 90 bis 99 Gew.-%, besonders bevorzugt 94 bis 99 Gew.-%, bezogen auf die gesamte thermoplastische Formmasse A.

Im Sinne der vorliegenden Erfindung meint teilkristallines Polymer ein Polymer mit einem amorphen Anteil kleiner 60 %, bevorzugt kleiner 50 Gew.-%, besonders bevorzugt kleiner 40 Gew.-%. Im Sinne der vorliegenden Erfindung meint teilkristallines Polyolefin-Polymer ein Polyolefin-Polymer mit einem amorphen Anteil kleiner 60 %, bevorzugt kleiner 50 Gew.-%, besonders bevorzugt kleiner 40 Gew.-%. Der kristalline bzw. amorphe Anteil in einem Polymer lässt sich mit üblichen Methoden, z.B. mittels DSC oder Röntgenstrukturanalyse ermitteln, und wird typischerweise in Gew.-% angegeben. In der Regel bilden teilkristalline Thermoplasten, wie etwa teilkristalline Polyolefine, regelmäßige geometrische Bereiche (Kristallite) aus. Kristalliten sind typischerweise Parallelbündelungen von Molekülabschnitten oder Faltungen von Molekülketten, wobei einzelne Kettenmoleküle dabei teilweise den kristallinen oder den amorphen Bereich durchlaufen können und/oder sogar mehreren Kristalliten gleichzeitig angehören können.

Bevorzugt handelt es bei dem teilkristallinen Polyolefin-Polymer A1 um ein teilkristallines Homo- oder Copolymer aus Ethylen, Propylen, Butylen und/oder Isobutylen. Bevorzugt umfasst das Polymer A1 zu mindestens 80 Gew.-% Propyleneinheiten. Insbesondere bevorzugt handelt es sich bei dem teilkristallinen Polymer A1 um ein oder mehrere Polypropylen-Homopolymere.

In einer bevorzugten Ausführungsform handelt es sich bei dem teilkristallinen Polyolefin-Polymer A1 um ein oder mehrere teilkristalline Polypropylen-Homopolymere, wobei das Polypropylen-Homopolymer einen amorphen Anteil von kleiner 60 Gew.-%, bevorzugt kleiner 50 Gew.-%, insbesondere bevorzugt kleiner 40 Gew.-%, bezogen auf das Polyolefin-Polymer A1, aufweist. Typischerweise weist das teilkristalline Polymer A1 eine kristallinen Anteil im Bereich von 40 bis 80 Gew.-%, bevorzugt 50 bis 70 Gew.-%, besonders bevorzugt 60 bis 80 Gew.-%, auf.

Bevorzugt handelt es sich bei dem Polyolefin-Polymer A1 um ein oder mehrere Polypropylen-Homopolymere, wobei die Polypropylen-Homopolymere eine Schmelzvolumenrate (bestimmt gemäß DIN EN ISO 1133 bei 230 °C / 2,16 kg) im Bereich von 50 bis 70 ml/10 min, oftmals etwa 60 ml/10min, aufweisen. Bevorzugt handelt es sich bei dem Polyolefin-Polymer A1 um ein oder mehrere Polypropylen-Homopolymere mit einer Dichte < 0,95 g/cm³, insbesondere in Bereich von 0,89 bis 0,93 g/cm³, bevorzugt 0,895 bis 0,915 g/cm³.

Bevorzugt handelt es sich bei dem Polyolefin-Polymer A1 um ein oder mehrere Polypropylen-Homopolymere mit einem Elastizitätsmodul (gemessen gemäß DIN EN ISO 178) im Bereich von 1500 bis 2100 MPa, oftmals etwa 1800 MPa und/oder einer Kristallisationstemperatur (gemessen mittels DSC) im Bereich von 120 bis 140 °C, oftmals etwa 130 °C.

Typischerweise handelt es sich bei dem Polyolefin-Polymer A1 um ein oder mehrere Polypropylen-Homopolymere mit einer überwiegend isotaktischen Struktur. Bevorzugt handelt es sich um ein oder mehrere Polypropylen-Homopolymere, welche einen kristallinen Anteil im Bereich von 40 bis 80 Gew.-%, bevorzugt 50 bis 70 Gew.-%, besonders bevorzugt 60 bis 80 Gew.-%, aufweisen.

### Das Polymer A2

Das optionale Polymer A2 ist zu Polymer A1 unterschiedlich und umfasst mindestens eine funktionelle Monomer-Einheit A2-I.

Bevorzugt enthält die thermoplastische Formmasse A mindestens 0,1 Gew.-%, bevorzugt mindestens 1 Gew.-%, besonders bevorzugt mindestens 3 Gew.-% des mindestens einen Polymers A2, bezogen auf die gesamte thermoplastische Formmasse A.

Bevorzugt enthält die thermoplastische Formmasse A das mindestens eine Polymer A2 im Bereich von 0,1 bis 30 Gew.-%, bevorzugt 0,1 bis 10 Gew.-%, besonders bevorzugt 1 bis 6 Gew.-%, insbesondere bevorzugt 3 bis 5 Gew.-%, bezogen auf die gesamte thermoplastische Formmasse A.

Typischerweise dient das Polymer A2 als Verträglichkeitsvermittler zwischen thermoplastischer Formmasse A und Verstärkungsfaser B. Typischerweise weist das Polymer A2 mindestens eine chemisch reaktive Funktionalität (typischerweise bereitgestellt durch das mindestens ein funktionelles Monomer A2-I) auf, welche während des Herstellungsprozesses der polymeren Zusammensetzung (bzw. der thermoplastischen Verarbeitung der Zusammensetzung) mit chemischen Gruppen der Oberfläche der Verstärkungsfaser B reagieren kann, wobei eine polymere Zusammensetzung bzw. ein Formteil mit einer gute Festigkeit erhalten wird. Oftmals erhöht das Polymer A2 die Polarität der thermoplastischen Formmasse A, wodurch die Kompatibilität mit dem polaren Verstärkungsfasern, bevorzugt den Glasfasern, erhöht wird.

In einer bevorzugten Ausführungsform umfasst das Polymer A2 mindestens 0,1 Gew.-%, bevorzugt 0,1 bis 3 Gew.-%, besonders bevorzugt 0,15 bis 1 Gew.-%, insbesondere bevorzugt 0,15 bis 0,25 Gew.-%, bezogen auf das Polymer A2, des mindestens einen funktionellen Monomers A2-I.

Gemäß einer bevorzugten Ausführungsform sind die funktionellen Monomere A2-I, ausgewählt aus der Gruppe bestehend aus Maleinsäureanhydrid (MA), N-Phenylmaleimid (PM), tert-Butyl(meth)acrylat und Glycidyl(meth)acrylat (GM), insbesondere ausgewählt aus der Gruppe bestehend aus Maleinsäureanhydrid (MA), N-Phenylmaleimid (PM) und Glycidyl(meth)acrylat (GM).

Bevorzugt handelt es sich bei dem Polymer A2 um ein Polymer aus Ethylen, Propylen, Butylen und/oder Isobutylen, wobei das Polymer mindestens ein funktionelles Monomer A2-I, ausgewählt aus Maleinsäureanhydrid, N-Phenylmaleimid, tert-Butyl(meth)acrylat und Glycidyl(meth)acrylat, umfasst Bevorzugt handelt es sich bei dem Polymer A2 um ein Copolymer aus Propylen und einem oder mehreren der oben genannten funktionellen Monomere A2-I.

Besonders bevorzugt handelt es sich bei Polymer A2 um ein Polypropylen-Pfropfcopolymer, wobei ein oder mehrere der oben genannten funktionellen Monomere A2-I auf ein Polypropylen aufgepfropft sind.

Bevorzugt ist das Polymer A2 ein Propylen-Maleinsäureanhydrid-Pfropfcopolymer. Solche modifizierten Polypropylene sind beispielweise unter den Produktnamen PRIEX^{®} 20093 (ADDCOMP), Orevac^{®} CA100 (Arkema) und Scona^{®} TPPP 9021 (BYK) bekannt.

Besonders bevorzugt handelt es sich bei dem Polymer A2 um ein oder mehrere Propylen-Maleinsäureanhydrid-Pfropfcopolymere, welche einen Anteil an Maleinsäureanhydrid als Monomer A2-I im Bereich von 0,01 bis 5 Gew.-%, bevorzugt 0,1 bis 0,4 Gew.-%, besonders bevorzugt von 0,15 bis 0,25 Gew.-%, bezogen auf das Polymer A2, aufweisen.

Insbesondere handelt es sich bei dem Polymer A2 um ein oder mehrere Propylen-Maleinsäureanhydrid-Pfropfcopolymere, welche eine Dichte von etwa 0,9 g/cm³, insbesondere von 0,895 bis 0,915 g/cm³ und/oder einen Schmelzflussindex (bestimmt gemäß DIN EN ISO 1133, bei 190 °C / 0,325 kg) im Bereich von 9 bis 13 g/10 min, aufweisen.

Bevorzugt handelt es sich bei dem Polyolefin-Polymer A2 um ein oder mehrere Propylen-Maleinsäureanhydrid-Pfropfcopolymere, welche einen Schmelzpunkt (gemessen gemäß DIN EN ISO 11357-3) im Bereich von 160 bis 165 °C und/oder eine Viskosität (gemessen gemäß DIN EN ISO 1628-1) im Bereich von 0.07-0.08 I/g aufweisen.

### Die Verstärkungsfaser B

Die polymere Zusammensetzung enthält mindestens 10 Gew.-%, bevorzugt mindestens 20 Gew.-%, besonders bevorzugt mindestens 30 Gew.-%, bezogen auf das Gesamtgewicht der polymeren Zusammensetzung, der Verstärkungsfaser B.

Die mindestens eine Verstärkungsfaser B ist in der polymeren Zusammensetzung von 10 bis 79 Gew.-%, bevorzugt von 20 bis 60 Gew.-%, besonders bevorzugt von 25 bis 50 Gew.-%, bezogen auf die polymere Zusammensetzung, enthalten.

Bevorzugt ist die Verstärkungsfaser B in der polymeren Zusammensetzung von 10 bis 80 Vol.-%, bevorzugt von 20 bis 70 Vol.-% und insbesondere bevorzugt von 30 bis 50 Vol.-%, bezogen auf die polymere Zusammensetzung, enthalten.

Typischerweise liegt die Dichte der Verstärkungsfaser B im Bereich von 1,4 bis 2,8 g/cm³. Typischerweise liegt die Dichte der Verstärkungsfaser B ausgewählt aus Glasfasern im Bereich von 1,8 bis 2,8 g/cm³. Typischerweise liegt die Dichte der Verstärkungsfaser B ausgewählt aus Carbonfasern im Bereich von 1,4 bis 1,8 g/cm³.

Typischerweise weist die Verstärkungsfaser B einen Filament-Durchmesser im Bereich von 5 bis 20 µm, bevorzugt 9 bis 15 µm, auf. Erfindungsgemäß sind die Filamente der Verstärkungsfaser B zu Geweben und/oder Garnen gebündelt.

In einer weiteren Ausführungsform umfasst die Oberfläche der Verstärkungsfasen B eine oder mehrere funktionelle Gruppen, bevorzugt polare funktionelle Gruppen, insbesondere bevorzugt funktionelle Gruppen ausgewählt aus Hydroxy-, Ester-, Amino- und Silanol-Gruppen.

In einer weiteren Ausführungsform handelt es sich bei der Verstärkungsfaser B um eine oder mehrere Glasfasern. Insbesondere bevorzugt handelt es sich bei der mindestens einer Verstärkungsfaser B um eine oder mehrere Glasfasern, deren Oberfläche funktionelle Gruppen ausgewählt aus Hydroxy-, Ester-, Amino- und Silanol-Gruppen, bevorzugt Silanolgruppen, umfasst.

Typischerweise werden die bekannten Qualitäten von Glasfasern, je nach Anforderungen und Einsatzgebiet, verwendet, z.B. Glasfasern vom Typ E-Glas (E=Electric; Aluminiumborsilikat-Glas mit weniger als 2 % Alkali-oxiden), S-Glas (S=Strength; Aluminiumsilikat-Glas mit Zusätzen von Magnesiumoxid), R-Glas (R=Résistance, Aluminiumsilikat-Glas mit Zusätzen von Calcium- und Magnesiumoxid), M-Glas (M=Modulus, berryliumhaltiges Glas), C-Glas (C=Chemical, Faser mit erhöhter Chemikalienbeständigkeit), ECR-Glas (E-Glass Corrosion Resistant), D-Glas (D = Dielectric, Faser mit niedrigem dielektrischen Verlustfaktor), AR-Glas (AR=Alkaline Resistant, für die Anwendung in Beton entwickelte Faser, mit Zirconium(IV)-oxid angereichert), Q-Glas (Q=Quarz, Faser aus Quarzglas SiO₂) und Hohlglasfasern.

Oftmals werden Glasfasern vom Typ E-Glas als Standardfaser für allgemeine Kunststoffverstärkung und für elektrische Anwendungen eingesetzt.

Darüber hinaus ist es möglich Kohlenstoff-Fasern (Kohlefasern oder Carbonfasern genannt) als Verstärkungsfaser B einzusetzen. Typischerweise sind Kohlenstoff-Fasern industriell gefertigte Fasern aus kohlenstoffhaltigen Ausgangsmaterialien, die mittels an den Rohstoff angepasste chemische Reaktionen in graphitartig angeordneten Kohlenstoff umgewandelt werden. Es können gängige isotrope und anisotrope Typen eingesetzt werden, wobei anisotrope Fasern typischerweise hohe Festigkeiten und Steifigkeiten bei gleichzeitig geringer Bruchdehnung in axialer Richtung aufweisen. Oftmals werden Kohlenstofffasern als Versteifungskomponente für den Leichtbau eingesetzt. Typischerweise weisen Kohlenstoff-Fasern einen Durchmesser von etwa 5-9 Mikrometer auf, wobei üblicherweise 1.000 bis 24.000 Filamente zu einem Multifilamentgarn (Roving) zusammengefasst werden.

Es ist auch möglich, dass die Verstärkungsfasern B schichtweise in der polymeren Zusammensetzung bzw. in dem daraus hergestellten Formteil oder Werkstoff eingebettet ist. Die Verstärkungsfaser B kann als Flächengebilde F vorliegen.

### Anorganischer Füllstoff C

Die polymere Zusammensetzung enthält mindestens 1 Gew.-%, bevorzugt mindestens 5 Gew.-%, besonders bevorzugt mindestens 8 Gew.-%, bezogen auf das Gesamtgewicht der polymeren Zusammensetzung, des mindestens einen anorganischen Füllstoffs C. Der mindestens eine anorganische Füllstoff C ist in der polymeren Zusammensetzung von 1 bis 70 Gew.-%, bevorzugt 1 bis 60 Gew.-%, bevorzugt 5 bis 35 Gew.-%, insbesondere bevorzugt 8 bis 18 Gew.-%, bezogen auf die gesamte polymere Zusammensetzung, enthalten.

Bevorzugt ist der mindestens eine anorganische Füllstoff C ausgewählt aus mineralischen Füllstoffen, welche sowohl in kristalliner Form als auch in amorpher Form (insbesondere als Glas) vorliegen können. Bevorzugt ist der mindestens eine anorganische Füllstoff C ausgewählt aus Glaspulver, amorpher Kieselsäure; Carbonaten (z.B. Magnesiumcarbonat, Calciumcarbonat (Kreide)); gepulvertem Quarz; Glimmer; Silikaten, wie z.B. Tone, Muskovit, Biotit, Suzoit, Zinnmaletit, Talkum, Chlorit, Phlogopit, Feldspat; Kaolin und Calciumsilikaten (wie z.B. Wollastonit).

In einer bevorzugten Ausführungsform enthält die erfindungsgemäße polymere Zusammensetzung mindestens 1 Gew.-%, bevorzugt 1 bis 70 Gew.-%, insbesondere bevorzugt 1 bis 30 Gew.-%, des mindestens eines anorganischen Füllstoffs C.

In einer bevorzugten Ausführungsform enthält die erfindungsgemäße polymere Zusammensetzung 1 bis 30 Gew.-%, mindestens eines anorganischen Füllstoffs C in kristalliner und/oder amorpher Form, ausgewählt aus Silikaten, Phosphaten, Sulfaten, Carbonaten und Boraten.

In einer bevorzugten Ausführungsform werden Füllstoffe C mit einer durchschnittlichen Partikelgröße D₅₀ im Bereich von bis zu 100 µm, bevorzugt von bis zu 10 µm, besonders bevorzugt von bis zu 1 µm als Füllstoff C eingesetzt.

Erfindungsgemäß werden anorganische Füllstoffe C eingesetzt, welche einen linearen thermischen Ausdehnungskoeffizienten α_{C} (CLTE, Coefficient of Linear Thermal Extension, gemessen gemäß ISO 11359-1 und ISO 11359-2) aufweisen, der geringer ist als der lineare thermische Ausdehnungskoeffizient α_{A} der thermoplastischen Formmasse A, d.h. es gilt α_{C} < α_{A}.

Bevorzugt weisen die anorganische Füllstoffe C einen linearen thermischen Ausdehnungskoeffizienten α_{C} (CLTE, Coefficient of Linear Thermal Extension, gemessen gemäß ISO 11359-1 und ISO 11359-2) im Bereich von 2 * 10⁻⁶ bis 20 * 10⁻⁶ K⁻¹, bevorzugt 5 * 10⁻⁶ bis 15 * 10⁻⁶ K⁻¹, insbesondere bevorzugt 7 * 10⁻⁶ bis 12 * 10⁻⁶ K⁻¹ auf.

Erfindungsgemäß werden anorganische Füllstoffe C eingesetzt, für die gilt: $\frac{{α}_{V , C} \times Volumenanteil C}{{α}_{V , B} \times Volumenanteil B} = 0 , 1 - 10$
bevorzugt 0,2 - 5, insbesondere bevorzugt 0,5 - 3,
mit
α_{V,C} = Koeffizient der thermischen Volumenausdehnung von C in 1/K,
Volumenanteil C = Volumenanteil von C, bezogen auf die gesamte polymere Zusammensetzung, in Vol.-% /100; α_{V,B} = Koeffizient der thermischen Volumenausdehnung von B in 1/K,
Volumenanteil B = Volumenanteil von B, bezogen auf die gesamte polymere Zusammensetzung, in Vol.-% /100; und wobei gilt
α_{V,C} = 3 * α_{C}; und
α_{V,B} = 3 * α_{B}
mit
α_{C} = mittlere lineare thermische Ausdehnungskoeffizent von C
a_{B} = mittlere lineare thermische Ausdehnungskoeffizent von B.

Einzelheiten zur Bestimmung des linearen thermischen Ausdehnungskoeffizienten α und des Koeffizienten der thermischen Volumenausdehnung α_{V} sind weiter oben beschrieben.

Bei der Herstellung der erfindungsgemäßen polymeren Zusammensetzung wird der anorganische Füllstoff C typischerweise zu der thermoplastischen Formmasse A zugegeben.

### Weitere Additiv(e) D

Die erfindungsgemäße polymere Zusammensetzung kann gegebenenfalls 0 bis 10 Gew.-%, vorzugsweise 0 bis 5 Gew.-%, besonders bevorzugt 0,01 bis 10 Gew.-%, besonders bevorzugt 0,1 bis 5 Gew.-% bezogen auf die gesamte polymere Zusammensetzung, eines oder mehrerer Additive D enthalten. Typischerweise handelt es sich bei dem optionalen Additiv D um übliche Hilfs- und Zusatzstoffe, die von den Komponenten A bis C unterschiedlich sind. Typische Kunststoffadditive sind beispielsweise in H. Zweifel et al., Plastics Additives Handbook, Hanser Verlag, 6. Ausgabe, 2009, beschrieben.

Bei der Herstellung der erfindungsgemäßen polymeren Zusammensetzung werden die Additive D typischerweise zu der thermoplastischen Formmasse A zugegeben.

Beispielsweise kann das mindestens eine weitere Additiv D ausgewählt sein aus Verarbeitungshilfsmittel, Stabilisatoren, Gleit- und Entformungsmitteln, Flammschutzmitteln, Farbstoffen, Pigmenten und Weichmachern. Als Stabilisatoren werden beispielsweise Antioxidantien (Oxidationsverzögerer) sowie Mittel gegen Wärmezersetzung (Wärmestabilisatoren) und Zersetzung durch ultraviolettes Licht (UV-Stabilisatoren) eingesetzt.

Geeignete UV-Stabilisatoren sind beispielsweise verschiedene substituierte Resorcine, Salicylate, Benzotriazole und Benzophenone. UV-Stabilisatoren werden typischerweise in Mengen bis zu 2 Gew.-%, bevorzugt von 0,01 bis 2 Gew.-%, bezogen auf die gesamte polymere Zusammensetzung, eingesetzt. Gängige UV-Stabilisatoren sind beispielsweise in H. Zweifel et al., Plastics Additives Handbook, Hanser Verlag, 6. Ausgabe, 2009, S. 246-329 beschrieben.

Geeignete Antioxidantien und Wärmestabilisatoren sind beispielsweise sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen. Gängige Antioxidantien sind beispielsweise in H. Zweifel et al., Plastics Additives Handbook, Hanser Verlag, 6. Ausgabe, 2009, S. 40-64 beschrieben.

Vorzugsweise werden Antioxidantien vom Typ Irganox^{®} (BASF) eingesetzt. Antioxidantien und Wärmestabilisatoren werden typischerweise in Mengen bis zu 1 Gew.-%, bevorzugt von 0,01 bis 1 Gew.-%, bezogen auf die gesamte polymere Zusammensetzung, eingesetzt.

In einer bevorzugten Ausführungsform enthält die erfindungsgemäße polymere Zusammensetzung ein oder mehrere Gleit- und Entformungsmittel als Additive D. Gängige Gleit- und Entformungsmittel sind beispielsweise in H. Zweifel et al., Plastics Additives Handbook, Hanser Verlag, 6. Ausgabe, 2009, S. 563-580 beschrieben. Geeignete Gleit- und Entformungsmittel sind beispielsweise Stearinsäure, Stearylalkohol, Stearinsäureester und -amide, sowie Ester des Pentaerythrits mit langkettigen Fettsäuren. Es können beispielsweise die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner können natürliche und/oder synthetische Wachse verwendet werden. Zu nennen sind beispielsweise PP-Wachse, PE-Wachse, PA-Wachse, gepfropfte PO-Wachse, HDPE-Wachsen, PTFE-Wachse, EBS-Wachse, Montanwachs, Carnauba- und Bienenwachse. Gleit- und Entformungsmittel werden typischerweise in Mengen bis zu 1 Gew.-%, bevorzugt von 0,01 bis 1 Gew.-%, bezogen auf die gesamte polymere Zusammensetzung, eingesetzt.

In einer bevorzugten Ausführungsform enthält die erfindungsgemäße polymere Zusammensetzung 0,1 bis 1 Gew.-%, bevorzugt 0,5 bis 0,9 Gew.-% Gleit- und Entformungsmittel als Additive D, wobei das Gleit- und Entformungsmittel bevorzugt ausgewählt ist aus Stearinsäureestern, insbesondere bevorzugt aus Glycerinmonostearat.

Geeignete Flammschutzmittel können halogenhaltige als auch halogenfreie Verbindungen sein. Geeignete Halogenverbindungen sind chlorierte und/oder bromierte Verbindungen, wobei bromierte Verbindungen den chlorierten vorzuziehen sind. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet. Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe in der erfindungsgemäßen polymeren Zusammensetzung als Additive D enthalten sein.

Diese sind typischerweise in Mengen von 0 bis 10 Gew.-%, bevorzugt 0,1 bis 10 Gew.-% und insbesondere 0,5 bis 8 Gew.-%, bezogen auf die gesamte polymere Zusammensetzung, enthalten. Typische Pigmente zur Einfärbung von Thermoplasten sind allgemein bekannt, siehe z.B. H. Zweifel et al., Plastics Additives Handbook, Hanser Verlag, 6. Ausgabe, 2009, S. 855-868 und 883-889 sowie R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃ · Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Als weitere bevorzugte Gruppe von Pigmenten sind schwarze Farbpigmente zu nennen, wie beispielsweise Eisenoxidschwarz (Fe₃O₄), Spinellschwarz (Cu(Cr,Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Weiterhin können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen.

### Verfahren zur Herstellung der polymeren Zusammensetzung

Ein weiterer Gegenstand der Erfindung ist ein Verfahren zur Herstellung der erfindungsgemäßen polymeren Zusammensetzung umfassend das Vermischen der Komponenten A, B, C und optional D, insbesondere bei Temperaturen von mindestens 200°C, bevorzugt bei einer Temperatur im Bereich von 200 bis 330 °C.

In einer bevorzugten Ausführungsform wird zunächst eine thermoplastische Matrix M hergestellt, welche anschließend mit der Verstärkungsfaser B vermischt wird.

Typischerweise erfolgt bei der Herstellung der Schritt der Reaktion von funktionellen Gruppen der thermoplastischen Matrix M mit funktionellen Gruppen an der Oberfläche der Verstärkungsfasern B.

Optional umfasst das Verfahren das Abkühlen der Mischung und optional weitere Verfahrensschritte.

### Thermoplastische Matrix M

Erfindungsgemäß enthält die thermoplastische Matrix M die oben beschriebene thermoplastische Formmasse A, welche das mindestens eine teilkristalline Polymer A1, bevorzugt das mindestens eine teilkristalline Polyolefin-Polymer A1, und optional das mindestens eine Polymer A2, umfassend mindestens ein funktionelles Monomer A2-I, sowie optional weitere Polymere A3 enthält. Die thermoplastische Matrix M enthält zudem den mindestens einen anorganischen Füllstoff C, wie oben beschrieben, insbesondere ein Glaspulver.

In einer bevorzugten Ausführungsform besteht die thermoplastische Matrix M aus der thermoplastischen Formmasse A und dem anorganischen Füllstoff C und optional der Komponente D. Typischerweise wird die thermoplastische Matrix M durch Mischen der Komponenten A und C und optional D bereitgestellt.

Die bevorzugten Ausführungsformen hinsichtlich der Zusammensetzung der polymeren Zusammensetzung und der Komponenten A, B, C und D, wie oben im Zusammenhang mit der erfindungsgemäßen Zusammensetzung beschrieben, gelten in entsprechender Weise auch für das erfindungsgemäße Verfahren.

Bevorzugt handelt es sich bei den funktionellen Gruppen der thermoplastischen Matrix M um die funktionellen Gruppen des Polymers A2, typischerweise um die funktionellen Gruppen des funktionellen Monomers A2-I.

In einer bevorzugten Ausführungsform besteht die thermoplastische Matrix aus 40 bis 50 Vol-% des mindestens einen anorganischen Füllstoffs C, bevorzugt ausgewählt aus teilchenförmigen mineralischen oder amorphen (glasartigen) Füllstoffen, bevorzugt ausgewählt aus Glaspulvern; und 60 bis 50 Vol.-% der oben beschriebenen thermoplastischen Formmasse A, welche bevorzugt aus den Polymeren A1 und A2 besteht.

Das erfindungsgemäße Verfahren zur Herstellung der polymeren Zusammensetzung kann kontinuierlich, semikontinuierlich oder diskontinuierlich erfolgen.

Gemäß einer bevorzugten Ausführungsform wird das Verfahren als kontinuierliches Verfahren durchgeführt, insbesondere als kontinuierliches Verfahren, z.B. zur Herstellung von glatten oder dreidimensional geprägten Folien.

Alternativ kann das erfindungsgemäße Verfahren semi- oder diskontinuierlich durchgeführt werden.

Bevorzugt kann das Verfahren zur Herstellung der erfindungsgemäßen polymeren Zusammensetzung mittels bekannter Schmelzcompoundierungsverfahren, wie z.B. Extrusion, durchgeführt werden.

Es ist zudem möglich, dass die Verstärkungsfasern B vor dem Vermischen mit der thermoplastischen Matrix M vorbehandelt bzw. imprägniert wird. Insbesondere wird wenigstens ein Teil der Verstärkungsfasern B einer Vorbehandlung unterzogen werden, wodurch die spätere Faser-Matrix-Haftung beeinflusst wird. Die Vorbehandlung kann beispielsweise einen Beschichtungsschritt, einen Ätzschritt, einen Wärmebehandlungsschritt oder einen mechanischen Oberflächenbehandlungsschritt enthalten. Insbesondere kann beispielsweise durch Erhitzen eines Teils der Verstärkungsfasern B ein bereits aufgebrachter Haftvermittler teilweise entfernt werden.

Die vorliegende Erfindung umfasst zudem ein Verfahren zur Herstellung eines Formteils unter Verwendung der erfindungsgemäßen polymerer Zusammensetzung. Die Herstellung des Formteils erfolgt üblicherweise mit Hilfe der bekannten Verformungsverfahren, wie Pressformung, Walzen, Warmpressen, Stanzen, und/oder der bekannten thermoplastischen Formgebungsverfahren, z.B. Spritzgießen. Bevorzugt wird am Ende des Verfahrens ein (weitgehend) festes Formteil erhalten. Bevorzugt umfasst daher das Verfahren als weiteren Schritt das Aushärten des Formteils. Optional kann das Formteil noch nachbearbeitet werden, beispielsweise durch die Schritte Entgraten, Polieren und/oder Färben.

Ein weiterer Aspekt der Erfindung betrifft die Verwendung der erfindungsgemäßen polymeren Zusammensetzung zur Herstellung von Formteilen, beispielsweise durch übliche Verformungsverfahren, wie oben beschrieben, z.B. Pressformung, Walzen, Warmpressen, Stanzen.

Die vorliegende Erfindung wird durch die nachfolgenden Beispiele und Ansprüche weiter erläutert.

### Beispiel 1

Die nachfolgenden Versuche wurden auf einer einfachen, beheizten diskontinuierlichen Presse bei Temperaturen von rund 230-240 °C und einem Pressdruck von rund 10 bar durchgeführt.

Die mittleren linearen thermischen Ausdehnungskoeffizienten α wurden als arithmetisches Mittel aus den Werten in längs und quer Richtung gemäß der ISO 11359-1,2 gemessen.

### Komponenten:

### A1 Polypropylen

Polypropylen-Homopolymer, mit einer Dichte < 0,9 g/cm³; Schmelz-Volumenfließrate MVR (230 °C/2,16 kg) 50-70 ml/10 min, meist 60 ml/10 min; Kristallisationstemperatur (DSC) 130 °C. Thermische Ausdehnungskoeffizienten α_{A1} = 60 * 10⁻⁶ K⁻¹, Koeffizient der thermischen Volumenausdehnung α_{V,A1} = 3 * α_{A1} = 180 * 10⁻⁶ K⁻¹

### A2 PRIEX^{®} 20093 (Altana, AddComp)

Chemisch modifiziertes Polypropylen-Polymer (weißes Granulat) mit einem hohen Anteil an aufgepfropftem Maleinsäureanhydrid (0,15-0,25 Gew.-%) mit einer Dichte von etwa 0,9 g/cm³.Thermische Ausdehnungskoeffizienten α_{A2c} = 65 * 10⁻⁶ K⁻¹, Koeffizient der thermischen Volumenausdehnung α_{V,A2} = 3 * α_{A2} = 195 * 10⁻⁶ K⁻¹

### B Glasfaser

Als Verstärkungsfaser B wurde ein Glasfaser-Körpergewebe mit folgenden Eigenschaften eingesetzt: Schlichte aus PP-Polymer, Flächengewicht 600 g/m2, 1200 tex Kettfaden. Thermische Ausdehnungskoeffizienten α_{B}=7 * 10⁻⁶ K⁻¹, Koeffizient der thermischen Volumenausdehnung α_{V,B} = 3 * α_{B} = 21 * 10⁻⁶ K⁻¹, Dichte B = ca. 2,5 g/ml.

### C Anorganischer Füllstoff

Es wurden die folgenden Füllstoffe C eingesetzt:
C1 (erfindungsgemäß):
   Glaspulver mit mittlerer Teilchengröße von rund 50 µm
   Thermische Ausdehnungskoeffizienten α_{C1} = 8 * 10⁻⁶ K⁻¹, Koeffizient der thermischen Volumenausdehnung α_{V,C1} = 3 * α_{C1} = 24 * 10⁻⁶ K⁻¹, Dichte C1 = ca. 2,5 g/ml.
C2 (Vergleich):
   Polyamid-66 Pulver mit mittlerer Teilchengröße von rund 50 µm.

Thermische Ausdehnungskoeffizienten α_{C2} = 80 * 10⁻⁶ K⁻¹, Koeffizient der thermischen Volumenausdehnung α_{V,C2} = 3 * α_{C2} = 240 * 10⁻⁶ K⁻¹, Dichte C2 = 1,3 g/ml.

Aus den oben beschriebenen Komponenten wurden die in Tabelle 1 beschriebenen polymeren Zusammensetzungen mit einer Dicke von 1,0 mm und einem Anteil an 45 Vol.-% Glasfaser (Komponente B wie oben beschreiben) mittels des oben beschriebenen Verfahrens hergestellt.

### Mechanische Charakterisierung:

An den hergestellten Zusammensetzungen (Formkörper) wurde die maximale Biegespannung σₘₐₓ gemäß der 3-Punkt-Biegeprüfung nach DIN 14125 bestimmt. Die Werte wurden jeweils in der Richtung 0° (in Faserrichtung) und 90° (senkrecht zur Faserrichtung) gemessen. Die Ergebnisse sind in Tabelle 1 dargestellt. Die optische Erscheinung wurde visuell anhand des folgenden Schemas beurteilt:
0: Vollständig ebene, spiegelglatte Oberfläche
1: Geringe Wellen auf einer ebenen Oberfläche
2: Deutliche Wellen, immer noch hoher Glanz
3: Hohe Anzahl an Wellen, mittlerer Glanz
4: Raue Oberfläche, geringer Glanz

**Tabelle 1: Herstellung und Charakterisierung der polymeren Zusammensetzungen**

| | | V1 | V2 | V3 (erfind.) | V4 (Vergl.) |
|---|---|---|---|---|---|
| A1 | Gew.-% | 50 | 55 | 35 | 35 |
| A2 | Gew.-% | 5 | 0 | 5 | 5 |
| B | Gew.-% | 45 | 45 | 30 | 30 |
| C1 | Gew.-% | 0 | 0 | 30 | 0 |
| C2 | Gew.-% | 0 | 0 | 0 | 30 |
| $\frac{{α}_{V , C} \times Volumenanteil C}{{α}_{V , B} \times Volumenanteil B}$ | | - | - | 1,1 | 22 |
| Biegespannung σₘₐₓ 0° | MPa | 3121 | 240 | | |
| Biegespannung σₘₐₓ 90° | MPa | 325 | 274 | | |
| Optische Beurteilung der Oberfläche | | 3 | 4 | 2 | 3 |

Das Beispiel V3 ist erfindungsgemäß, das Beispiel V4 dient als Vergleichsbeispiel.

## Patentansprüche

1. Polymere Zusammensetzung enthaltend:
a) 20 bis 79 Gew.-% einer thermoplastischen Formmasse A, wobei die thermoplastischen Formmasse A mindestens ein teilkristallines Polymer A1 und optional mindestens ein Polymer A2 umfassend mindestens ein funktionelles Monomer A2-I enthält;
b) 10 bis 79 Gew.-% mindestens einer Verstärkungsfaser B, wobei die Filamente der Verstärkungsfaser B zu Geweben und/oder Garnen gebündelt sind;
c) 1 bis 70 Gew.-% mindestens eines anorganischen Füllstoffs C,
d) 0 bis 10 Gew.-% mindestens eines weiteren Additivs D,
wobei der mindestens eine anorganische Füllstoff C einen linearen thermischen Ausdehnungskoeffizienten α_{C} (CLTE, Coefficient of Linear Thermal Extension, gemessen gemäß ISO 11359-1 und ISO 11359-2) aufweist, der geringer ist als der lineare, thermische Ausdehnungskoeffizienten α_{A} der thermoplastischen Formmasse A,
wobei der mindestens eine anorganische Füllstoff C einen Volumenschrumpf aufweist, der 0,1 bis 10 mal so groß ist wie der Volumenschrumpf der Verstärkungsfaser B, wobei sich der Volumenschrumpf ergibt aus dem Koeffizient der thermischen Volumenausdehnung α_{V} in 1/K der jeweiligen Komponente multipliziert mit dem Anteil der jeweiligen Komponente in der polymeren Zusammensetzung in Vol.-%/100, wobei gilt: $\frac{{α}_{V , C} \times Volumenanteil C}{{α}_{V , B} \times Volumenanteil B} = 0 , 1 - 10$
mit
α_{V,C} = Koeffizient der thermischen Volumenausdehnung von C in 1/K,
wobei α_{V,C} = 3 *α_{C} ist;
Volumenanteil C = Volumenanteil von C, bezogen auf die gesamte polymere Zusammensetzung, in Vol.-% /100;
α_{V,B} = Koeffizient der thermischen Volumenausdehnung von B in 1/K,
wobei α_{V,B} = 3 * α_{B} ist;
Volumenanteil B = Volumenanteil von B, bezogen auf die gesamte polymere Zusammensetzung, in Vol.-% /100;
und wobei die Angaben in Gew.-% und in Vol.-% jeweils bezogen sind auf die gesamte polymere Zusammensetzung.

2. Polymere Zusammensetzung gemäß Anspruch 1, **dadurch gekennzeichnet, dass** die thermoplastische Formmasse A 1 bis 100 Gew.-%, bezogen auf die gesamte thermoplastische Formmasse A, des mindestens einen teilkristallinen Polymers A1, ausgewählt aus Polyamid, Polypropylen und Polyethylen, enthält.

3. Polymere Zusammensetzung gemäß Anspruch 1 oder 2, **dadurch gekennzeichnet, dass** die thermoplastische Formmasse A 60 bis 99,9 Gew.-% des mindestens einen teilkristalline Polyolefin-Polymers A1 und 0,1 bis 40 Gew.-% des mindestens einen Polymers A2, jeweils bezogen auf die gesamte thermoplastische Formmasse A, enthält.

4. Polymere Zusammensetzung gemäß mindestens einem der Ansprüche 1 bis 3, **dadurch gekennzeichnet, dass** es sich bei dem teilkristallinen Polyolefin-Polymer A1 um ein oder mehrere teilkristalline Homo- oder Copolymer aus Ethylen, Propylen, Butylen und/oder Isobutylen handelt.

5. Polymere Zusammensetzung gemäß mindestens einem der Ansprüche 1 bis 4, **dadurch gekennzeichnet, dass** es sich bei dem teilkristallinen Polyolefin-Polymer A1 um ein oder mehrere Polypropylen-Homopolymere handelt.

6. Polymere Zusammensetzung gemäß mindestens einem der Ansprüche 1 bis 5, **dadurch gekennzeichnet, dass** es sich bei dem teilkristallinen Polyolefin-Polymer A1 um ein oder mehrere teilkristalline Polypropylen-Homopolymere handelt, wobei das Polypropylen-Homopolymer einen amorphen Anteil von kleiner 60 Gew.-%, bezogen auf das Polyolefin-Polymer A1, aufweist.

7. Polymere Zusammensetzung gemäß mindestens einem der Ansprüche 1 bis 6, **dadurch gekennzeichnet, dass** es sich bei dem teilkristallinen Polyolefin-Polymer A1 um ein oder mehrere teilkristalline Polypropylen-Homopolymere handelt, wobei die Polypropylen-Homopolymere eine Schmelzvolumenrate im Bereich von 50 bis 70 ml/10 min aufweisen.

8. Polymere Zusammensetzung gemäß mindestens einem der Ansprüche 1 bis 7, **dadurch gekennzeichnet, dass** es sich bei dem Polymer A2 um mindestens ein Polymer aus Ethylen, Propylen, Butylen und/oder Isobutylen handelt, wobei das Polymer mindestens ein funktionelles Monomer A2-I, ausgewählt aus Maleinsäureanhydrid, N-Phenylmaleimid, tert-Butyl(meth)acrylat und Glycidyl(meth)acrylat, umfasst.

9. Polymere Zusammensetzung gemäß mindestens einem der Ansprüche 1 bis 8, **dadurch gekennzeichnet, dass** es sich bei dem Polymer A2 um ein oder mehrere Propylen-Maleinsäureanhydrid-Pfropfcopolymere handelt, welche einen Anteil an Maleinsäureanhydrid als Monomer A2-I im Bereich von 0,01 bis 5 Gew.-%, bezogen auf das Polymer A2, aufweisen.

10. Polymere Zusammensetzung gemäß mindestens einem der Ansprüche 1 bis 9, **dadurch gekennzeichnet, dass** es sich bei der mindestens einer Verstärkungsfaser B um eine oder mehrere Glasfasern handelt, deren Oberfläche funktionelle Gruppen, ausgewählt aus Hydroxy-, Ester-, Amino- und Silanol-Gruppen, umfasst.

11. Polymere Zusammensetzung gemäß mindestens einem der Ansprüche 1 bis 10, **dadurch gekennzeichnet, dass** die polymere Zusammensetzung 1 bis 30 Gew.-%, mindestens eines anorganischen Füllstoffs C enthält.

12. Polymere Zusammensetzung gemäß mindestens einem der Ansprüche 1 bis 11, **dadurch gekennzeichnet, dass** die polymere Zusammensetzung 1 bis 30 Gew.-%, mindestens eines anorganischen Füllstoffs C in kristalliner und/oder amorpher Form enthält, ausgewählt aus Silikaten, Phosphaten, Sulfaten, Carbonaten und Boraten.

13. Polymere Zusammensetzung gemäß mindestens einem der Ansprüche 1 bis 12, enthaltend:
a) 25 bis 55 Gew.-% der mindestens einen thermoplastischen Formmasse A,
b) 40 bis 60 Gew.-%, der mindestens einen Verstärkungsfaser B,
c) 5 bis 35 Gew.-%, des mindestens einen anorganischen Füllstoffs C und
d) 0 bis 10 Gew.-%, mindestens eines weiteren Additives D.

14. Verfahren zur Herstellung einer polymere Zusammensetzung, wie in mindestens einem der Ansprüche 1 bis 13 beschrieben, umfassend das Vermischen der Komponenten A, B, C und optional D.

15. Verfahren gemäß Anspruch 14, **dadurch gekennzeichnet, dass** das Vermischen bei einer Temperatur von mindestens 200°C erfolgt.

16. Verwendung einer polymeren Zusammensetzung, wie in mindestens einem der Ansprüche 1 bis 13 beschrieben, zur Herstellung eines Formteils.

## Claims

1. Polymeric composition comprising:
a) 20 to 79% by weight of a thermoplastic molding composition A, where the thermoplastic molding composition A comprises at least one semicrystalline polymer A1 and optionally at least one polymer A2 comprising at least one functional monomer A2-I;
b) 10 to 79% by weight of at least one reinforcing fiber B, wherein the filaments of the reinforcing fiber B are bundled into fabrics and/or yarns;
c) 1 to 70% by weight of at least one inorganic filler C,
d) 0 to 10% by weight of at least one further additive D,
where the at least one inorganic filler C has a coefficient of linear thermal expansion α_{C} (CLTE, coefficient of linear thermal expansion, measured in accordance with ISO 11359-1 and ISO 11359-2) which is smaller than the coefficient of linear thermal expansion α_{A} of the thermoplastic molding composition A,
where the at least one inorganic filler C has a volume shrinkage which is 0.1 to 10 times as great as the volume shrinkage of the reinforcing fiber B, where the volume shrinkage is calculated from the coefficient of thermal volume expansion α_{V} in 1/K of the respective component multiplied by the proportion of the respective component in the polymeric composition in % by volume/100, where: $\frac{{α}_{V , C} \times \begin{matrix}proportion by volume \\ of C\end{matrix}}{{α}_{V , B} \times \begin{matrix}proportion by volume \\ of B\end{matrix}} = 0.1 - 10$
where
α_{V,C} = coefficient of thermal volume expansion of C in 1/K,
where α_{V,C} = 3 * α_{C};
proportion by volume of C = proportion by volume of C, based on the entire polymeric composition, in % by volume/100;
α_{V,B} = coefficient of thermal volume expansion of B in 1/K,
where α_{V,B} = 3 * α_{B};
proportion by volume of B = proportion by volume of B, based on the entire polymeric composition, in % by volume/100;
and where the data in % by weight and in % by volume respectively are based on the entire polymeric composition.

2. Polymeric composition according to Claim 1, **characterized in that** the thermoplastic molding composition A comprises 1 to 100% by weight, based on the entire thermoplastic molding composition A, of the at least one semicrystalline polymer A1, selected from polyamide, polypropylene and polyethylene.

3. Polymeric composition according to Claim 1 or 2, **characterized in that** the thermoplastic molding composition A comprises 60 to 99.9% by weight of the at least one semicrystalline polyolefin polymer A1 and 0.1 to 40% by weight of the at least one polymer A2, respectively based on the entire thermoplastic molding composition A.

4. Polymeric composition according to at least one of Claims 1 to 3, **characterized in that** the semicrystalline polyolefin polymer A1 is one or more semicrystalline homo- or copolymers of ethylene, propylene, butylene and/or isobutylene.

5. Polymeric composition according to at least one of Claims 1 to 4, **characterized in that** the semicrystalline polyolefin polymer A1 is one or more polypropylene homopolymers.

6. Polymeric composition according to at least one of Claims 1 to 5, **characterized in that** the semicrystalline polyolefin polymer A1 is one or more semicrystalline polypropylene homopolymers, where the polypropylene homopolymer has less than 60% by weight of amorphous content, based on the polyolefin polymer A1.

7. Polymeric composition according to at least one of Claims 1 to 6, **characterized in that** the semicrystalline polyolefin polymer A1 is one or more semicrystalline polypropylene homopolymers, where the polypropylene homopolymers have a melt volume rate in the range of 50 to 70 ml/10 min.

8. Polymeric composition according to at least one of Claims 1 to 7, **characterized in that** the polymer A2 is at least one polymer of ethylene, propylene, butylene and/or isobutylene, where the polymer comprises at least one functional monomer A2-I, selected from maleic anhydride, N-phenylmaleimide, tert-butyl(meth)acrylate and glycidyl(meth)acrylate.

9. Polymeric composition according to at least one of Claims 1 to 8, **characterized in that** the polymer A2 is one or more propylene-maleic anhydride graft copolymers which have a proportion of maleic anhydride as monomer A2-I in the range of 0.01 to 5% by weight, based on the polymer A2.

10. Polymeric composition according to at least one of Claims 1 to 9, **characterized in that** the at least one reinforcing fiber B is one or more glass fibers whose surface comprises functional groups, selected from hydroxy, ester, amino and silanol groups.

11. Polymeric composition according to at least one of Claims 1 to 10, **characterized in that** the polymeric composition comprises 1 to 30% by weight of at least one inorganic filler C.

12. Polymeric composition according to at least one of Claims 1 to 11, **characterized in that** the polymeric composition comprises 1 to 30% by weight of at least one inorganic filler C in crystalline and/or amorphous form, selected from silicates, phosphates, sulfates, carbonates and borates.

13. Polymeric composition according to at least one of Claims 1 to 12, comprising:
a) 25 to 55% by weight of the at least one thermoplastic molding composition A,
b) 40 to 60% by weight of the at least one reinforcing fiber B,
c) 5 to 35% by weight of the at least one inorganic filler C and
d) 0 to 10% by weight of at least one further additive D.

14. Process for the production of a polymeric composition as described in at least one of Claims 1 to 13, comprising the mixing of the components A, B, C and optionally D.

15. Process according to Claim 14, **characterized in that** the mixing takes place at a temperature of at least 200°C.

16. Use of a polymeric composition as described in at least one of Claims 1 to 13, for the production of a molding.

## Revendications

1. Composition polymère, contenant :
a) 20 à 79% en poids d'une masse de moulage thermoplastique A, la masse de moulage thermoplastique A contenant au moins un polymère partiellement cristallin A1 et éventuellement au moins un polymère A2 comprenant au moins un monomère fonctionnel A2-I ;
b) 10 à 79% en poids d'au moins une fibre de renforcement B, les filaments de la fibre de renforcement B étant regroupés en tissus et/ou en fils ;
c) 1 à 70% en poids d'au moins une charge inorganique C,
d) 0 à 10% en poids d'au moins un autre additif D, ladite au moins une charge inorganique C présentant un coefficient de dilatation thermique linéaire α_{C} (CLTE, coefficient of linear thermal extension, mesuré selon les normes ISO 11359-1 et ISO 11359-2) qui est inférieur au coefficient de dilatation thermique linéaire α_{A} de la masse de moulage thermoplastique A,
ladite au moins une charge inorganique C présentant un retrait volumique qui est 0,1 à 10 fois plus grand que le retrait volumique de la fibre de renforcement B, le retrait volumique étant obtenu à partir du coefficient de dilatation volumique thermique α_{V} en 1/K du composant respectif multiplié par la proportion du composant respectif dans la composition polymère en % en volume/100, où : $\frac{{α}_{V , C} x proportion volumique C}{{α}_{V , B} x proportion volumique B} = 0 , 1 - 10$
où
α_{V,C} = coefficient de dilatation volumique thermique de C en 1/K,
où α_{V,C} = 3 * α_{C} ;
proportion volumique C = proportion volumique de C, par rapport à toute la composition polymère, en % en volume/100 ;
α_{V,B} = coefficient de dilatation volumique thermique de B en 1/K,
où α_{V,B} = 3 * α_{B} ;
proportion volumique B = proportion volumique de B, par rapport à toute la composition polymère, en % en volume/100 ;
et les indications en % en poids et en % en volume se rapportant respectivement à toute la composition polymère.

2. Composition polymère selon la revendication 1, **caractérisée en ce que** la masse de moulage thermoplastique A contient 1 à 100 % en poids, par rapport à toute la masse de moulage thermoplastique A, dudit au moins un polymère partiellement cristallin A1, choisi parmi le polyamide, le polypropylène et le polyéthylène.

3. Composition polymère selon la revendication 1 ou 2, **caractérisée en ce que** la masse de moulage thermoplastique A contient 60 à 99,9% en poids dudit au moins un polymère polyoléfinique partiellement cristallin A1 et 0,1 à 40% en poids dudit au moins un polymère A2, respectivement par rapport à toute la masse de moulage thermoplastique A.

4. Composition polymère selon au moins l'une quelconque des revendications 1 à 3, **caractérisée en ce qu'**il s'agit, pour le polymère polyoléfinique partiellement cristallin A1, d'un ou de plusieurs homopolymères ou copolymères partiellement cristallins de l'éthylène, du propylène, du butylène et/ou de l'isobutylène.

5. Composition polymère selon au moins l'une quelconque des revendications 1 à 4, **caractérisée en ce qu'**il s'agit, pour le polymère polyoléfinique partiellement cristallin A1, d'un ou de plusieurs homopolymères de polypropylène.

6. Composition polymère selon au moins l'une quelconque des revendications 1 à 5, **caractérisée en ce qu'**il s'agit, pour le polymère polyoléfinique partiellement cristallin A1, d'un ou de plusieurs homopolymères partiellement cristallins de polypropylène, l'homopolymère de polypropylène présentant une proportion amorphe inférieure à 60% en poids, par rapport au polymère polyoléfinique A1.

7. Composition polymère selon au moins l'une quelconque des revendications 1 à 6, **caractérisée en ce qu'**il s'agit, pour le polymère polyoléfinique partiellement cristallin A1, d'un ou de plusieurs homopolymères partiellement cristallins de polypropylène, les homopolymères de polypropylène présentant un indice de fluidité à chaud en volume dans la plage de 50 à 70 ml/10 min.

8. Composition polymère selon au moins l'une quelconque des revendications 1 à 7, **caractérisée en ce qu'**il s'agit, pour le polymère A2, d'au moins un polymère d'éthylène, de propylène, de butylène et/ou d'isobutylène, le polymère comprenant au moins un monomère fonctionnel A2-1, choisi parmi l'anhydride de l'acide maléique, le N-phénylmaléimide, le (méth)acrylate de tert-butyle et le (méth)acrylate de glycidyle.

9. Composition polymère selon au moins l'une quelconque des revendications 1 à 8, **caractérisée en ce qu'**il s'agit, pour le polymère A2, d'un ou de plusieurs copolymères greffés de propylène-anhydride de l'acide maléique, qui présentent une proportion d'anhydride de l'acide maléique en tant que monomère A2-1 dans la plage de 0,01 à 5% en poids, par rapport au polymère A2.

10. Composition polymère selon au moins l'une quelconque des revendications 1 à 9, **caractérisée en ce qu'**il s'agit, pour ladite au moins une fibre de renforcement B, d'une ou de plusieurs fibres de verre, dont la surface comprend des groupes fonctionnels choisis parmi les groupes hydroxy, ester, amino et silanol.

11. Composition polymère selon au moins l'une quelconque des revendications 1 à 10, **caractérisée en ce que** la composition polymère contient 1 à 30% en poids d'au moins une charge inorganique C.

12. Composition polymère selon au moins l'une quelconque des revendications 1 à 11, **caractérisée en ce que** la composition polymère contient 1 à 30% en poids d'au moins une charge inorganique C sous forme cristalline et/ou amorphe, choisie parmi les silicates, les phosphates, les sulfates, les carbonates et les borates.

13. Composition polymère selon au moins l'une quelconque des revendications 1 à 12, contenant :
a) 25 à 55% en poids de ladite au moins une masse de moulage thermoplastique A,
b) 40 à 60% en poids de ladite au moins une fibre de renforcement B,
c) 5 à 35% en poids de ladite au moins une charge inorganique C et
d) 0 à 10% en poids d'au moins un autre additif D.

14. Procédé pour la préparation d'une composition polymère telle que décrite dans au moins l'une quelconque des revendications 1 à 13, comprenant le mélange des composants A, B, C et éventuellement D.

15. Procédé selon la revendication 14, **caractérisé en ce que** le mélange est réalisé à une température d'au moins 200°C.

16. Utilisation d'une composition polymère telle que décrite dans au moins l'une quelconque des revendications 1 à 13 pour la fabrication d'une pièce moulée.
